# EUROPÄISCHE PATENTSCHRIFT

(11) **EP 0 770 780 B1**
(45) Veröffentlichungstag und Bekanntmachung des Hinweises auf die Patenterteilung: **22.08.2001**
(21) Anmeldenummer: 96116129.6
(22) Anmeldetag: 09.10.1996
(51) Int. Cl.: F04D 13/02, F04D 29/58

(54) **Kreiselpumpenaggregat mit einer Magnetkupplung**
Centrifugal pump unit with a magnetic coupling
Unité de pompe centrifuge avec un coupleur d'entraînement magnétique

(30) Priorität: 26.10.1995 DE 19539878
(43) Veröffentlichungstag der Anmeldung: 02.05.1997
(73) Patentinhaber: KSB Aktiengesellschaft, 67227 Frankenthal (DE)
(72) Erfinder: Albrecht, Ludwig, 91242 Ottensoos (DE); Prager, Steffen, 91257 Pegnitz (DE); Schreyer, Horst, 91217 Hersbruck (DE)

(56) Entgegenhaltungen:
- DE-A- 3 639 719
- DE-U- 29 505 250
- GB-A- 2 167 495
- WORLD PUMPS, Nr. 335, 1.August 1994, Seiten 8-12, XP000461871 KENNER E: "ALLWEILER - MEW PUMP DEVELOPMENTS FORM THE PROFILE"

## Beschreibung

Die Erfindung betrifft ein Kreiselpumpenaggregat, dessen Pumpenteil über eine Wellenverbindung von einem Elektromotor angetrieben wird, mit einer zwischen dem Elektromotor und der Kreiselpumpe angeordneten Magnetkupplung, deren Primärteil mit der Welle des Elektromotors und deren Sekundärteil mit der Welle der Kreiselpumpe verbunden ist, wobei innerhalb des den Sekundärteil der Magnetkupplung aufnehmenden, vom Fördermedium beaufschlagten und vom Spalttopf der Magnetkupplung umschlossenen Innenraumes ein von einem Fremdmedium durchströmter Wärmeaustauscher angeordnet ist.

Über Magnetkupplungen angetriebene Kreiselpumpen, welche auch als Magnetkupplungspumpen bezeichnet werden, zählen zu den hermetisch dichten Pumpen, da die vom Fördermedium beaufschlagten Räume ausschließlich an gegeneinander ruhenden Flächen abgedichtet sind. Die Übertragung des von einem Motor gelieferten Drehmomentes erfolgt über Permanentmagnete, die an einem mit der Motorwelle verbundenen Primärteil und an einem mit der Pumpenwelle verbundenen Sekundärteil angeordnet sind. Zwischen Primär- und Sekundärteil befindet sich die Wand eines Spalttopfes, welcher den mit dem Pumpenraum verbundenen Innenraum der Magnetkupplung gegenüber der Umgebung abdichtet. Durch einen Spaltstrom der Förderflüssigkeit, welcher vom Pumpenraum her kommt und zu diesem zurückgeführt wird, werden während des Pumpenbetriebes ein Teil der in der Magnetkupplung entstehenden Wärme abgeführt und die im Innenraum der Magnetkupplung vorhandenen Lager geschmiert.

Ein besonderes Problem für Magnetkupplungspumpen stellen Fördermedien dar, die nur im heißen Zustand leichtflüssig sind, bei einer Abkühlung auf die Temperatur, der die Magnetkupplungspumpe umgebenden Atmosphäre aber zähflüssig werden oder gar erstarren. Solche, vor allem im Bereich der Chemie- und Verfahrenstechnik zu fördernde Medien müssen vor der Inbetriebnahme der Magnetkupplungspumpe wieder in den flüssigen Zustand versetzt werden, damit sie die zur Aufrechterhaltung eines einwandfreien Betriebes notwendigen Funktionen zu erfüllen vermögen.Während das Aufheizen und Verflüssigen des Fördermediums im Hydraulikteil der Kreiselpumpe problemlos mittels einer über die Pumpenwandung zugeführten Wärmeleistung vorzunehmen ist, ist der gegenüber der Umgebung weitgehend abgeschirmte Innenteil der Magnetkupplung nur schwer für die notwendige Wärmeübertragung erreichbar. Alle im Bereich der die Magnetkupplung umgebenden Wände angeordneten Heizeinrichtungen, seien es von einem Heizmedium durchströmte Hohlräume oder elektrische Heizungen, haben entweder nur eine mittelbare Wirkung, da zwischen ihnen und dem Innenraum der Magnetkupplung ein Luftraum und abschirmende Wandungen, beispielsweise des Primärteils, vorhanden sind oder sie besitzen nur eine vergleichsweise kleine, für die Wärmeübertragung zum Innenraum der Magnetkupplung nutzbare Fläche, beispielsweise einen schmalen Wandteil eines den Hydraulik- mit dem Antriebsteil der Magnetkupplungspumpe verbindenden, von einem Heizmedium durchströmten hohlen Zwischenstücks. Dies aber bedeutet, daß auch bei einer relativ hohen Heizleistung eine lange Aufheizphase vor der Inbetriebnahme der Magnetkupplungspumpe in Kauf genommen werden muß.

Durch die DE-C-36 39 719 ist es bereits bekannt, wenigstens einen Teil des Spalttopfes mindestens doppelwandig auszuführen. Der durch die Doppel- oder Mehrfachwandigkeit gebildete Wandungsinnenraum kann dabei über eine Zuleitung und eine Ableitung, welche im Verbindungsflansch des Spalttopfes verlaufen, mit der Außenseite der Magnetkupplungspumpe verbunden werden. Hierdurch wird es möglich, den Wandungsinnenraum von einem Heiz- oder Kühlmedium durchströmen zu lassen. Der Spalttopf wirkt somit an Innenseite als ein Wärmeaustauscher, der in unmittelbarem Kontakt mit dem innerhalb des Spalttopfes befindlichen Fördermedium steht. Von Nachteil ist allerdings der Umstand, daß die Doppel- oder Mehrfachwandigkeit und der zwischen den Wänden gebildete Wandungsinnenraum eine nennenswerte Vergrößerung der Wandstärke und damit eine Vergrößerung des Abstandes zwischen den Magneten des Primär- und des Sekundärteiles mit sich bringen. Ein vergrößerter Abstand zwischen den Magneten erbringt aber eine Leistungsverschlechterung der Magnetkupplung. Im übrigen bringt ein doppel- oder mehrfachwandiger Spalttopf eine Erhöhung des Aufwandes für die Herstellung und die Unterbringung in der Magnetkupplungspumpe mit sich.

Durch die DE-U-295 05 250 ist eine Magnetkupplung bekannt, bei der eine Einrichtung zur Zirkulation eines Temperierfluides durch eine Fluidströmungspassage in einer in wärmeübertragender beabstandeter Beziehung zum abtriebsseitigen Kupplungselement drehfest gehaltenen Gehäuseanordnung vorgesehen ist. Konkret wird in dieser Schrift ein speziell ausgebildetes Lagergehäuse gelehrt, welches eine Fluidströmungskammer enthält. Im übrigen wird darauf verwiesen, daß auch eine andere in wärmetrübertragender Beziehung zum abtriebsseitigen Kupplungselement stehende Gehäuseanordnung vorgesehen werden kann, wobei allerdings über den Ort und die Gestaltung dieser Gehäuseanordnung nichts ausgesagt wird. Schließlich wird in der zitierten Schrift noch gesagt, daß eine um das Lagergehäuse oder die anderweitige Gehäuseanordnung gelegte oder darin eingelassene Rohrwindung vorgesehen sein kann.

Ein Nachteil der in der DE-U-295 05 250 gelehrten Ausführung liegt in der Notwendigkeit einer speziellen Gestaltung des mit einer Fluidströmungskammer ausgestatten Gehäuseteils, die sich wegen des großen Platzbedarfs auf die gesamte Magnetkupplung und deren Gestaltung auswirkt. Eine Nachrüstung eines solchermaßen ausgeführten Gehäuseteils ist, wie man anhand des im Ausführungsbeispiel der Schrift dargestellten voluminösen Lagergehäuses feststellen kann, kaum möglich. Eine um ein vorhandenes Gehäuseteil gelegte oder darin eingelassene Rohrwindung würde ebenfalls viel Platz beanspruchen, brächte also die gleiche Problematik mit sich. Ein weiteres Problem der konkret gelehrten Ausführung liegt darin, daß die der Wärmeübertragung dienende Wand des Lagergehäuses durch den Sekundärteil der Magnetkupplung weitestgehend abgeschirmt wird. So kann die an der Wand des Wärmeaustauschers temperierte Flüssigkeit nur über einen schmalen Spalt in den übrigen Bereich des Innenraumes der Magnetkupplung gelangen. Die Aufwärmung oder die Kühlung der in der Magnetkupplung befindlichen Flüssigkeit wird daher nur langsam erfolgen. Dies wiederum hat zur Folge, daß der zwischen dem Sekundärteil und der Wand des Spalttopfes gelegene Spalt sehr spät mit temperierter Flüssigkeit versorgt wird, was beispielsweise einer wirksamen Kühlung oder einer schnellen Inbetriebnahme einer über die Magnetkupplung angetriebenen Kreiselpumpe im Wege steht.

Der Erfindung liegt die Aufgabe zugrunde, eine Magnetkupplungspumpe zu schaffen, deren Wärmeaustauscher unmittelbar, also ohne eine Beeinträchtigung durch irgendwelche Gehäuseteile auf das im Innenraum der Magnetkupplung befindliche Fördermedium einwirkt und die damit keine Leistungsverringerung bewirkt.

Die Aufgabe wird erfindungsgemäß dadurch gelöst, daß der Wärmeaustauscher an einer Stelle des Innenraumes angeordnet ist, die als freier Bereich gegenüber den Bereichen verbleibt, in welchen der Sekundärteil der Magnetkupplung, die mit diesem verbundene Welle der Kreiselpumpe und deren Lager angeordnet sind..

Mit dem erfindungsgemäßen Wärmeaustauscher kann der im Innenraum der Magnetkupplung vorhandene freie Platz optimal genutzt werden. Dies gilt vor allem für einen von einer Rohrschlange gebildeten Wärmeaustauscher, dessen Windungen optimal an die gegebenen räumlichen Verhältnisse angepaßt werden können.

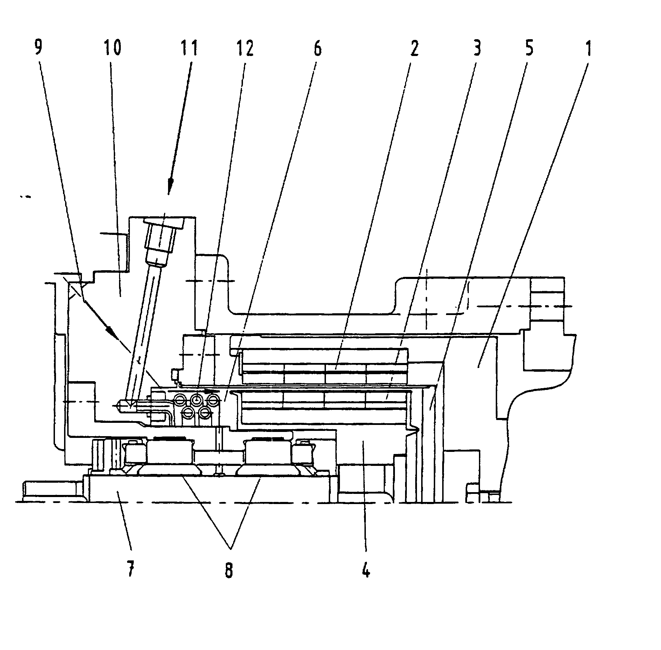

Anhand eines Ausführungsbeispiels wird die Erfindung näher erläutert. Die Zeichnung zeigt einen Teilschnitt einer Magnetkupplung in einer Kreiselpumpe.

Durch die Magnetkupplung werden ein links angeordneter - nur teilweise dargestellter - Kreiselpumpenteil und ein rechts angeordneter - nicht dargestellter-Elektromotor miteinander verbunden. Mit der - ebenfalls nicht dargestellten - Welle des Elektromotors ist ein Primärteil 1 fest verbunden. Der Primärteil 1 trägt gleichmäßig über den Umfang verteilt angeordnete Magnete 2. Konzentrisch zu den Magneten 2 sind Magnete 3 auf einem Sekundärteil 4 angeordnet. Zwischen dem Primärteil 1 und dem Sekundärteil 4 befindet sich ein Spalttopf 5, der einen Innenraum 6 hermetisch gegenüber der Umgebung abdichtet.

Der Sekundärteil 4 ist auf einer Pumpenwelle 7 befestigt, die an ihrem dem Sekundärteil 4 gegenüberliegenden Ende ein - nicht dargestelltes - Laufrad trägt. Zur Lagerung der Pumpenwelle 7 dienen Gleitlager 8.

Während des Pumpenbetriebes gelangt ein Teilstrom 9 aus dem - nicht dargestellten - Pumpenraum in den Innenraum 6 der Magnetkupplung, während an anderer Stelle ein entsprechender Teilstrom aus dem Innenraum 6 in den Pumpenraum abgeführt wird. Somit findet bei laufender Magnetkupplungspumpe ein ständiger Austausch von Fördermedium zwischen dem Pumpenraum und dem Innenraum 6 statt.

Im Gehäusedeckel 10 der Magnetkupplungspumpe sind Kanäle für einen Zulauf 11 und einen auf der gegenüberliegenden Seite angeordneten - nicht dargestellten-Ablauf vorgesehen, welche mit einem im Innenraum 6 angeordneten Wärmeaustauscher 12 verbunden sind. Der Wärmeaustauscher 12 besteht aus einem ein- oder mehrfach gewickelten Rohr, kann aber auch jede beliebige andere, an die Raumverhältnisse im Innenraum 6 angepaßte Gestalt besitzen.

Der Wärmeaustauscher 12, über den ein flüssiges oder dampfförmiges Medium geführt werden kann, vermag zwei Funktionen zu erfüllen. Zum einen kann während des Betriebs der Magnetkupplungspumpe der Wärmeaustauscher 12 mit einem Fluid beschickt werden, das ein Temperaturgefälle zur Flüssigkeit im Innenraum 6 besitzt und daher einen Kühleffekt erzeugt. Zum anderen ist über den Wärmeaustauscher 12 ein heißes Medium führbar, welches einen Teil seines Wärmeinhalts an das im Innenraum 6 befindliche Medium abgibt und dieses, sofern es durch eine Temperaturabsenkung während des Stillstandes der Magnetkupplungspumpe erstarrt sein sollte, wieder verflüssigt. Die letztgenannte Maßnahme ist vorzusehen vor einer erneuten Inbetriebnahme der Magnetkupplungspumpe nach einem längeren Stillstand.

## Patentansprüche

1. Kreiselpumpenaggregat, dessen Pumpenteil über eine Wellenverbindung von einem Elektromotor angetrieben wird, mit einer zwischen dem Elektromotor und der Kreiselpumpe angeordneten Magnetkupplung, deren Primärteil mit der Welle des Elektromotors und deren Sekundärteil mit der Welle der Kreiselpumpe verbunden ist, wobei innerhalb des den Sekundärteil der Magnetkupplung aufnehmenden, vom Fördermedium beaufschlagten und vom Spalttopf der Magnetkupplung umschlossenen Innenraumes ein von einem Fremdmedium durchströmter Wärmeaustauscher angeordnet ist, **dadurch gekennzeichnet,** daß der Wärmeaustauscher (12) an einer Stelle des Innenraumes (6) angeordnet ist, die als freier Bereich gegenüber den Bereichen verbleibt, in welchen der Sekundärteil (4) der Magnetkupplung, die mit diesem verbundene Welle (7) der Kreiselpumpe und deren Lager (8) angeordnet sind.

2. Kreiselpumpenaggregat nach Anspruch 1, dadurch gekennzeichnet, daß der Wärmeaustauscher (12) von einem einfach oder mehrfach gewickelten Rohr gebildet wird.

## Claims

1. Centrifugal pump assembly, the pump part of which is driven by an electric motor via a shaft connection, with a magnetic coupling which is arranged between the electric motor and the centrifugal pump and the primary part of which is connected to the shaft of the electric motor and the secondary part of which is connected to the shaft of the centrifugal pump, a heat exchanger, through which an extraneous medium flows, being arranged within the inner space which receives the secondary part of the magnetic coupling, is subjected to the feed medium and is surrounded by the displayed cam of the magnetic coupling, characterized in that the heat exchanger (12) is arranged at a point in the inner space (6) which remains as a free region with respect to the regions in which are arranged the secondary part (4) of the magnetic coupling, the shaft (7) of the centrifugal pump, connected to said secondary part, and the bearings (8) of the latter.

2. Centrifugal pump assembly according to Claim 1, characterized in that the heat exchanger (12) is formed by a singly or multiply coiled tube.

## Revendications

1. Unité de pompe centrifuge dont la partie de pompe est entraînée par un moteur électrique par le biais d'un raccord d'arbre, comprenant un accouplement magnétique disposé entre le moteur électrique et la pompe centrifuge, dont la partie primaire est connectée à l'arbre du moteur électrique et dont la partie secondaire est connectée à l'arbre de la pompe centrifuge, dans laquelle, à l'intérieur de l'espace interne recevant la partie secondaire de l'accouplement magnétique, sollicité par le liquide refoulé et entouré par la coupelle de l'entrefer de l'accouplement magnétique, est disposé un échangeur de chaleur parcouru par un milieu étranger, **caractérisée en ce que** l'échangeur de chaleur (12) est disposé en un endroit de l'espace interne (6) demeurant sous la forme d'une région libre par rapport aux régions dans lesquelles sont disposés la partie secondaire (4) de l'accouplement magnétique, l'arbre (7) de la pompe centrifuge raccordé à celle-ci et son palier (8).

2. Unité de pompe centrifuge selon la revendication 1, caractérisée en ce que l'échangeur de chaleur (12) est formé par un tube enroulé une seule fois ou plusieurs fois.
